# EUROPÄISCHE PATENTANMELDUNG

(11) **EP 0 849 331 A2**
(43) Veröffentlichungstag der Anmeldung: **24.06.1998**
(21) Anmeldenummer: 97122141.1
(22) Anmeldetag: 16.12.1997
(51) Int. Cl.: C08L 83/04, C08K 3/36

(54) **Verfahren zur Herstellung von hochgefüllten Siliconpolymer-Feststoff-Vormischungen**

(30) Priorität: 21.12.1996 DE 19653993
(71) Anmelder: Hüls Silicone Gesellschaft mit beschränkter Haftung, D-01610 Nünchritz (DE)
(72) Erfinder: Schöley, Peter, 01612 Nünchritz (DE); Winkler, Ralf, Dr.rer.nat., 01445 Radebeul (DE); Schickmann, Harald, 01662 Meissen (DE)
(74) Vertreter: Zöllner, Gudrun

(57) **Zusammenfassung**

Die Erfindung betrifft ein Verfahren zur Herstellung von hochgefüllten Siliconpolymer-Feststoff-Vormischungen, welche zur Herstellung von Siliconkautschuken eingesetzt werden.

## Beschreibung

Die Erfindung betrifft ein Verfahren zur Herstellung von hochgefüllten Siliconpolymer-Feststoff-Vormischungen, welche zur Herstellung von Siliconkautschuken eingesetzt werden.

Verfahren zur Verteilung von Feststoffen in Flüssigkeiten sind bekannt. Üblicherweise wird der Feststoff mit Hilfe mehr oder weniger schnell drehender Mischorgane in die Flüssigkeit eingearbeitet und dabei vollstandig benetzt. Die erhaltene Mischung aus benetztem Feststoff und Flüssigkeit wird anschließend in einem Mischraum über eine genügend lange Zeit einer mechanischen Beanspruchung unterzogen, um eine möglichst homogene Verteilung des Feststoffes in der Flüssigkeit zu erreichen.

Zur Intensivierung dieser mechanische Beanspruchung wird oft so vorgegangen (Masterbatchverfahren, s. Degussa "Schriftenreihe Pigmente" Nummer 63, 1995), dass die Gesamtmenge eines Feststoffes in zunächst nur eine Teilmenge einer Flüssigkeit eingearbeitet wird. Durch die über einen höheren Feststoffanteil erreichbare höhere Konsistenz der Feststoff-Flüssigkeits-Mischung kann wesentlich effektiver Knet-und/oder Scherenergie durch ein Mischorgan eingetragen werden, da sich der Eintrag von Mischenergie stärker auf Bereiche des Mischgutes in der Nähe des Mischorgans auswirkt. Nach der mechanischen Beanspruchung der Mischung aus Feststoff und Flüssigkeits-Teilmenge erfolgt die Rückverdünnung mit weiterer Flüssigkeit.

Problematisch ist es, nach dem Masterbatch-Verfahren in Flüssigkeiten eine große Menge von Feststoffen einzuarbeiten. Dabei ist es gleichgültig, ob in einem offenen Mischaggregat, wie Zwei-Wellen-Kneter oder Dissolver, oder in einem geschlossenen, wie Stempelkneter oder Pressmixer, oder in einem kontinuierlichen Mischer, beispielsweise in einem Zwei-Schnecken-Extruder, gearbeitet wird. Wenn zuviel Feststoff zugesetzt wird, zerfällt die kompakte Mischung und ist damit nicht weiter verarbeitbar, insbesondere im Falle von Mischungen mit halbaktiven oder aktiven Feststoffen kommt es zur Krümelbildung.

Die Verteilung von hochdispersen Kieselsauren als Rheologiehilfsmittel in organischen Polymeren beschreibt ein Prospekt der Wacker-Chemie GmbH ("HDK Das Verdickungsmittel", 1985), der dabei angestrebte Kieselsäuregehalt in der fertigen Formulierung ist jedoch relativ gering.

Bei der Herstellung von Siliconkautschuk-Mischungen ist es zur Verbesserung der mechanischen Festigkeit des vernetzten Elastomeren erforderlich, große Mengen von vor allem aktiven Feststoffen wie hochdispersen Kieselsäuren, gefällten oder natürlichen Kreiden, hochdispersen Metalloxiden, wie Aluminium- oder Titandioxid, in Siliconpolymere einzuarbeiten.

Es ist bekannt, die Einarbeitung von Feststoffen durch Zusätze von Einarbeitungshilfsmitteln zu beschleunigen. Dazu setzt man bei der Herstellung von kieselsäuregefüllten Siliconkautschuk-Mischungen beispielsweise monomere oder oligomere, in Bezug auf die Kieselsäureoberfläche reaktive Silane, wie Hexamethyldisilazan oder kurzkettige Polydimethylsiloxane mit Hydroxyl-Endgruppen, als Hilfsmittel ein, wobei die Kieselsäureoberfläche gleichzeitig hydrophobiert, d. h. einer chemischen Behandlung unterzogen wird (NOLL "Chemie und Technologie der Silicone" 1968, S. 346). Der Prozeß der in-situ-Hydrophobierung von Kieselsäure mit Hexamethyldisilazan wird seit langem zur Herstellung von bei Raumtemperatur vernetzenden, kieselsäuregefüllten Zweikomponenten-Siliconkautschuken genutzt (s. beispielsweise DE 24 33 697). Trotz des Einsatzes dieser bekannten Hilfsmittel und der Anwendung des sogenannten Masterbatchverfahrens sind einer Steigerung des Kieselsäureanteils in der Mischung und damit der Intensität der Beanspruchung des Mischgutes mit den bisher bekannten Verfahren Grenzen gesetzt. Bei Einsatz anderer Feststoffe ist es möglich, Dispergierhilfsmittel einzusetzen. Dabei werden nur relativ geringe Mengen venwendet, welche in der Regel im Produkt verbleiben. Aber auch hierbei sind einer Steigerung des Feststoffanteiles in der Mischung Grenzen gesetzt.

DE 25 35 334 beschreibt ein Verfahren zur homogenen Verteilung hochdisperser Füllstoffe in Polysiloxanen. Dabei wird der Feststoff während des Einmischens in das Polymer in-situ-hydrophobiert und die Mischung dann einer mechanischen Behandlung unterzogen Es wird ein Kieselsäureanteil von ca. 25 Gew.-% erreicht.

Ein extrudierbares Material, bestehend aus Polymer und Füllstoff wird in DE 44 42 871 beschrieben. Dabei werden bis 33 bis etwa 65 Gew-% Feststoff mit einem Polymer unter Bedingungen relativ hoher Schereinwirkung kombiniert und anschließend unter Beibehaltung der hohen Scherkräfte vermischt. Bei diesem Verfahren ist der Einsatz hoher Scherwirkung schon während des Einmischens des Füllstoffes in das Polymer und somit ein entsprechendes Mischaggregat erforderlich. Dies ist technologisch nur schwer realisierbar, da bereits während der Einarbeitung in die zu diesem Zeitpunkt noch relativ dünnflüssige Mischung hohe Scherkräfte eingetragen werden müssen. Ein effektiver Energieeintrag ist erst in höher gefüllten Mischungen möglich.

Es sind keine Verfahren bekannt, welche die Herstellung sehr hochgefüllter Siliconpolymer-Feststoff-Vormischungen in einfachen Mischaggregaten beschreiben.

Der Erfindung lag die Aufgabe zugrunde, den Feststoffanteil in Siliconpolymer-Feststoff-Vormischungen zu erhöhen. Mit den hochgefüllten Vormischungen sind Siliconkautschuk-Mischungen herstellbar, welche sich durch eine verbesserte Fließfähigkeit der unvernetzten Mischungen und sehr gute mechanische Eigenschaften, wie beispielsweise eine höhere Dehnbarkeit und geringere Shore-A-Härte der ausgehärteten Elastomere, auszeichnen.

Gegenstand der Erfindung ist ein Verfahren zur Erhöhung des Feststoffanteils in Siliconpolymer-Feststoff-Vormischungen und die damit verbundene bessere Verteilung des Feststoffes in einem vorzugsweise linearen Polyorganosiloxan mit dem Ziel der Verbesserung sowohl der rheologischen Eigenschaften der unvernetzten Mischugnen als auch der Elastomer-Kennwerte.

Die Erhöhung des Feststoffanteils wird erfindungsgemäß dadurch erreicht, dass ein leichtflüchtiges Siloxan, welche keine hydrolysierbaren Gruppen aufweist, zunächst zur Einarbeitung des Feststoffes in ein Polyorganosiloxan gegeben und dann anschließend mittels Vakuum und/oder durch erhöhte Temperatur wieder entfernt wird Dadurch gelingt es, den Feststoffanteil in Siliconpolymer-Vormischungen weit über den nach bisher bekannten Verfahren erreichbaren maximalen Anteil in Füllstoff-Polymer-Mischungen zu erhöhen ohne dass die Mischung zerfällt.

Erfindungsgemäß werden in eine Mischung (A) aus
(a) 100 Gew.-Teilen mindestens eines linearen und/oder verzweigten Polyorganosiloxanes, bei welchem bis zu 5 Mol-% der Organoreste vernetzungsfähige Gruppen sind, und
(b) 5 bis 200 Gew.-Teilen, vorzugsweise 20 bis 100 Gew.-Teilen, mindestens einer leichflüchtigen, keine hydrolysierbaren Gruppen aufweisenden, niedermolekularen siliciumorganischen Verbindung
100 bis 500 Gew.-Teile, vorzugsweise 150 bis 300 Gew.-Teile eines Feststoffes (B) eingearbeitet, dann wird die Verbindung (b) entfernt und anschließend die hochgefüllte Mischung mechanisch beansprucht.

Als Polyorganosiloxane (a) werden lineare und/oder verzweigte Polyorganosiloxane mit bis zu 5 Mol-% der Organoreste vernetzungsfähige Gruppen eingesetzt, die vorzugsweise mehr als 50 Si-Atome und Viskositäten zwischen 0,05 und 100 Pas aufweisen. Beispiele für vernetzungsfähige Gruppen sind Hydroxy- und/oder Alkoxygruppen in kondensationsvernetzenden Systemen, Dimethylvinylsiloxy- und/oder Hydrogen-Endgruppen und/oder Hydrogen- und/oder Vinyl-Seitengruppen in additionsvernetzenden oder Vinylgruppen in peroxidisch vernetzenden Systemen. Als weitere, nichtvernetzend wirkende Gruppen können unter anderem Methyl-, Phenyl- und/oder Trifluorpropylreste gebunden sein. Als verzweigte Polyorganosiloxane werden flüssige Siloxane eingesetzt, die neben di- und monofünktionellen Siloxy-Einheiten auch tri- und tetrafunktionelle Einheiten aufweisen. Das Verhältnis von tri- und tetrafunktionellen zu monofunktionelle Gruppen wird dabei üblicherweise so gewählt, dass die Polymere Flüssigkeiten darstellen. Sie werden beispielsweise mit dem Ziel, spezielle Fließverhalten in den Elastomeren zu erreichen, verwendet. Es können auch Gemische verschiedener Polyorganosiloxane eingesetzt werden.

Leichtflüchtige, keine hydrolysierbaren Gruppen aufweisende, niedermolekulare siliciumorganische Verbindungen (b) sind solche, die keine SiX-Gruppierungen enthalten, bei denen X einen hydrolyisierbaren Rest, wie beispielsweise Hydroxyl-, Alkoxy-, Chlor-, Oxim-, Stickstoff- oder Wasserstoffreste, darstellt. Bevorzugt werden Hexaalkyldisiloxan, weitere niedermolekulare Dialkylsiloxane mit bis zu 5 Si-Atomen und/oder ein oder mehrere cyclische Dialkylsiloxane mit 3 bis 6 Siliciumatomen eingesetzt. Vorteilhafterweise und aus Gründen der technischen Verfügbarkeit weisen die eingesetzten Verbindungen als Alkylgruppen Methylgruppen auf.

Als Feststoffe (B) können alle für die Verwendung in Siliconkautschuk-Mischungen bekannten Feststoffe eingesetzt werden, insbesonders aktive Feststoffe, wie hochdisperse Kieselsäuren, gefällte oder natürliche Kreiden, Kieselgure, hochdisperse Metalloxide, wie Aluminium- oder Titandioxid. Besonders bevorzugt sind pyrogene und gefällte Kieselsäuren, beispielsweise mit einer BET-Obefläche größer 50 m²/g. Die Oberflächen der verwendeten Feststoffe können vorbehandelt sein.

Bei Verwendung von hochdisperser hydrophiler Kieselsäure ist es vorteilhaft, vor oder Während deren Einarbeitung 0,1 bis 50 Gew.-Teile, vorzugsweise 1 bis 10 Gew.-Teile, mindestens einer zur Oberflächenbehandlung der Kieselsäure geeigneten, reaktiven Verbindung (aa) zuzusetzen, wobei die Summe aller Gew.-Teile der Mischung (A) 100 ist. Bevorzugt werden siliciumorganische Verbindungen mit 1 bis 2 Si-Atomen verwendet, beispielsweise Silazane, wie Hexamethyldisilazan, oder Trialkylsilanole, beispielsweise Trimethylsilanol. Bei Verwendung von Silazanen ist es üblich, in Gegenwart von Wasser zu arbeiten, falls die der Kieselsäure anhaftende Feuchtigkeit nicht ausreichend ist. Bei Einsatz von Silanolen ist es günstig, Silazane oder ein NH₃-Wasser-Gemisch zuzusetzen. Weiterhin können als reaktive Verbindungen kurzkettige Siloxane mit bis zu 10 Si-Atomen und Alkoxy-, Acetoxy-, Chlor- und/oder Hydroxygruppen eingesetzt werden. Gebildete, leichflüchtige Verbindungen werden gemeinsam mit der Verbindung (b) nach der Einarbeitung der Kieselsäure aus der Vormischung entfernt.

Die Einarbeitung des Feststoffes (B) in die Mischung (A) kann beispielsweise diskontinuierlich im Zwei-Wellen-Kneter, Pressmixer, Dissolver oder in anderen bekannten Mischaggregaten erfolgen. Selbstverständlich kann das erfindungsgemäße Verfahren auch in kontinuierlich arbeitenden Mischaggregaten, wie dem Zwei-Schnecken-Extruder durchgeführt werden. Die Einarbeitung kann bei Raumtemperatur oder erhöhter Temperatur und bei Drücken über dem atmosphärischen Druck erfolgen.

Nach der Einarbeitung werden die Verbindung (b) sowie gegebenenfalls enthaltene oder beispielsweise während der Hydrophobierung gebildete, leichtflüchtige Verbindungen aus der Vormischung üblicherweise mittels Vakuum und/oder Temperaturerhöhung entfernt.

Die erhaltene hochgefüllte Mischung wird anschließend einer mechanischen Beanspruchung durch ein rotierendes Mischorgan unterzogen, vorzugsweise im gleichen Mischaggregat, in welchem auch das Einmischen des Feststoffes erfolgte, beispielsweise dem Zwei-Wellen-Kneter. Die Zeit der Beanspruchung kann von wenigen Minuten bis zu mehreren Stunden dauern und ist ebenso wie die Intensität der Beanspruchung abhängig vom gewünschten Mischungsgrad sowie der angestrebten Teilchengröße des Feststoffes. Der erhöhte Feststoffanteil ermöglicht dabei einen wesentlich intensiveren Energieeintrag in die Vormischung als es mit den bekannten Verfahren möglich ist. Das hat zur Folge, dass eine wesentlich bessere Verteilung des Feststoffes im Polyorganosiloxan erzielt werden kann.

Die mechanische Beanspruchung kann über die Drehzahl des Mischorgans gesteuert werden, wobei eine möglichst hohe Drehzahl angestrebt wird. Bedingt durch den hohen Anteil an Feststoff in der Vormischung ist es jedoch auch möglich, in Mischaggregaten mit langsam drehenden Mischorgan die gewünschte Knet- und/oder Scherenergie einzubringen. Wird in einem vollständig gefüllten (totraumfreien) Mischraum gearbeitet, ist es möglich, durch die dabei ausgeübte, intensive mechanische Beanspruchung der hochgefüllten Vormischung mittlere Teilchgrößen von Kieselsäure von kleiner 100 nm, beispielsweise kleiner 50 nm, zu erreichen. Auch eine mechanische Beanspruchung unter Einwirkung von Druck ist möglich. Günstig ist weiterhin die Verwendung eines Mischaggregates, welches beheizbar ist, um eventuell während oder nach dem Mischvorgang noch enthaltene leichtflüchtige Verbindungen aus der Mischung zu entfernen.

Die nach der erfindungsgemäßen Verfahrensweise erhaltenen hochgefüllten Vormischungen können in Abhängigkeit vom späteren Anwendungszweck entweder mit Polyorganosiloxan (a) verdünnt und/oder als Siliconkautschuk-Vormischung gelagert oder gegebenenfalls nach Zusatz weiterer üblicher Mischungsbestandteile, wie Vernetzer, Weichmacher, Katalysatoren, Haftvermittler, Pigmenten, verstärkend wirkenden Verbindungen, wie MQ-Siliconharzen, sowie weiteren aktiven oder inaktiven Füllstoffen, zum fertig ausgehärteten Elastomer verarbeitet werden. Zur Erzielung einer homogenen und lagerstabilen Mischung erfolgt die Verdünnung bevorzugt bei Temperaturen oberhalb 100 °C.

Siliconkautschuk-Mischungen, welche aus den erfindungsgemäß hergestellten Vormischungen resultieren, haben gegenüber den herkömmlichen Mischungen den großen Vorteil, dass sie außerordentlich lagerstabil, d. h. ihre Viskosität auch über mehrere Monate beibehalten, und auch als hochgefüllte Mischungen mit einer guten Fließfähigkeit herstellbar sind. Weiterhin sind sie unter Erhaltung von guten mechanischen Elastomer-Kennwerten wesentlich niedrigviskoser als herkömmlich hergestellte Mischungen.

Die erfindungsgemäß hergestellten Siliconpolymer-Feststoff-Vormischungen sind beispielsweise in fließfähigen Siliconkautschuk-Mischungen, als Abform- und Vergussmassen bzw. bei Verwendung von Kreide als Feststoff zur Herstellung von Dichtmassen einsetzbar.

### Ausführungsbeispiele

Alle Viskositätsangaben beziehen sich auf 25°C.

### Beispiel 1

In einem 0,5 l fassenden Zwei-Wellen-Kneter wurden 90 g einer nicht vorbehandelten, pyrogenen Kieselsäure mit einer Oberfläche von 200 m²/g in ein Gemisch aus 120 g eines hydroxyterminierten Polydimethylsiloxans einer Viskosität von 5 Pas, 15 g Hexamethyldisiloxan, 24 g Hexamethyldisilazan und 6 g Wasser eingearbeitet. Diese Mischung wurde 1 Stunde bei 130 °C geknetet. Anschließend erfolgte im Vakuum ein Aufheizen auf 160 °C, wobei Hexamethyldisiloxan und gebildete, leicht flüchtige Verbindungen entfernt wurden. Die so erhaltene hochgefüllte Siliconkautschuk-Vormischung wurde bei Temperaturen zwischen 130 und 160°C eine weitere Stunde geknetet. Anschließend wurde mit 120 g des hydroxyterminierten Polydimethylsiloxans und 60 g eines trimethylsiloxyterminierten Polydimethylsiloxans einer Viskosität von 0, 1 Pas rückverdünnt. Die Viskosität der erhaltenen Mischung betrug 34 Pas.

100 g der hergestellten Mischung wurden mit 5 g einer Vernetzerflüssigkeit, welche aus 60 Gew.-Teilen Tetraethoxysilan, 35 Gew.-Teilen Methyltriethoxysilan und 5 Gew.-Teilen Dibutylzinndilaurat bestand, 7 Tage bei Raumtemperatur ausgehärtet. Das ausgehärtete Elastomer wies eine Härte von 31 Shore A und eine Weiterreißfestigkeit von 25 N/mm auf

### Beispiel 2

Beispiel 1 wurde wiederholt mit der Abänderung, dass die Kieselsäure in ein Gemisch aus 90 g eines hydroxyterminierten Polydimethylsiloxans einer Viskosität von 5 Pas, 45 g Hexamethyldisiloxan, 24 g Hexamethyldisilazan und 6 g Wasser eingearbeitet wurde. Die Viskosität der verdünnten Mischung betrug 27 Pas.
Das mit der Vernetzerflüssigkeit ausgehärtete Material wies eine Härte von 28 Shore A und eine Weiterreißfestigkeit von 24 N/mm auf.

### Beispiel 3 (Vergleichsbeispiel)

Beispiel 1 wurde wiederholt mit der Abänderung, dass die Kieselsäure in ein Gemisch aus 135 g eines hydroxyterminierten Polydimethylsiloxans einer Viskosität von 5 Pas, 24 g Hexamethyldisilazan und 6 g Wasser eingearbeitet wurde. Es erfolgte kein Zusatz von Hexamethyldisiloxan. Die Viskosität der verdünnten Mischung betrug 59 Pas.
Das mit der Vernetzerflüssigkeit ausgehärtete Material wies eine Härte von 29 Shore A und eine Weiterreißfestigkeit von 25 N/mm auf.

Das Vergleichsbeispiel zeigt, dass die Mischung, welche die gleiche Zusammensetzung wie die der Beispiele 1 und 2 hat, bei gleich hoher Weiterreißfestigkeit eine für die spätere Anwendung unenwünschte, wesentlich höhere Viskosität aufweist.

### Beispiel 4

Beispiel 1 wurde wiederholt mit der Abänderung, dass die Kieselsäure eine Oberfläche von von 300 m²/g aufweis und in ein Gemisch aus 65 g eines dimethylvinylsiloxylterminierten Polydimethylsiloxanes einer Viskosität von 6 Pas, 45 g Hexamethyldisiloxan, 28,5 g Hexamethyldisilazan 1,5 g Divinyltetramethyldisilazan und 7,5 g Wasser eingearbeitet und die Mischung 1 Stunde bei 130°C geknetet wurde. Die erhaltene Mischung wurde mit 145 g dimethylvinylsiloxylterminiertem Polydimethylsiloxan einer Viskosität von 6 Pas verdünnte Die Viskosität der erhaltenen Mischung betrug 172 Pas.

90 g der Mischung wurden mit einer Vernetzerkomponente, bestehend aus 6.9 g dimethylvinylsiloxylterminiertem Polydimethylsiloxan einer Viskosität von 6 Pas, 0,3 g eines 1 %igem Pt-Katalysators und 2,8 g dimethylhydrogensiloxylterminiertem Polydimethylsiloxan mit einem H-Si Gehalt von 4,0 mmol/g, während 30 min bei 150 °C ausgehärtet.
Das ausgehärtete Material wies eine Härte von 28 Shore A und eine Weiterreißfestigkeit von 30 N/mm auf.

### Beispiel 5 (Vergleichsbeispiel)

Beispiel 4 wurde wiederholt mit der Abänderung, dass kein Hexamethyldisiloxan eingearbeitet wurde. Die Viskosität der verdünnten Mischung betrug 272 Pas.
Das mit der Vernetzerkomponente gem. Beispiel 4 ausgehärtete Material wies eine Härte von 29 Shore A und eine Weiterreißfestigkeit von 30 N/mm auf.

Das Vergleichsbeispiel ohne Zusatz vonHexamethyldisilazan zeigt, dass die Fertigmischung, welche die gleiche Zusammensetzung wie die aus Beispiel 4 hat, bei gleich hoher Härte und Weiterreißfestigkeit eine für die spätere Anwendung unerwünschte, wesentlich höhere Viskosität aufweist.

### Beispiel 6

Beispiel 4 wurde wiederholt mit der Abänderung, dass die Kieselsäure in ein Gemisch aus 65 g eines dimethylvinylsiloxyterminierten Polydimethylsiloxans einer Viskosität von 60 Pas, 45 g Oktamethylcyclotetrasiloxan, 28,5 g Hexamethyldisilazan, 1,5 g Divinyltetramethyldisilazan und 7,5 g Wasser eingearbeitet wurde.
Die Rückverdünnung erfolgte mit 295 g des dimethylvinylsiloxyterminierten Polydimethylsiloxans der Viskosität von 60 Pas. Die Viskosität der erhaltenen Mischung betrug 239 Pas.

90 g dieser Mischung wurden mit einer Vernetzerkomponente bestehend aus 8.3 g dimethylvinylsiloxylterminiertem Polydimethylsiloxan einer Viskosität von 6 Pas, 0,3 g eines 1 %igen Pt-Katalysators und 1 g dimethylhydrogensiloxylterminiertem Polydimethylsiloxan mit einem H-Si Gehalt von 7,0 mmol/g, während 30 min bei 150 °C ausgehärtet. Das ausgehärtete Material wies eine Härte von 30 Shore A und eine Weiterreißfestigkeit von 20 N/mm auf.

### Beispiel 7

Das Beispiel 1 wurde wiederholt mit der Abänderung, dass die erhaltene hochgefüllte Siliconkautschuk-Vormischung in einem Labor-Pressmixer totraumfrei mit einer Umlaufgeschwindigkeit des Mischorgans von 10 ms⁻¹ bei einem Druck von 9 bar und einer Temperatur von 120 °C während 120 min intensiv mechanisch belastet wurde. Vor der weitem Verdünnung wurde mittels Transmissionselektronenmikroskopie eine mittlere Teilchgröße von 40 nm ermittelt. Die Viskosität der verdünnten Mischung betrug 28 Pas.

### Beispiel 8

Das Beispiel 1 wurde wiederholt mit der Abänderung, dass nach der mechnischen Belastung die Verdünnung der hochgefüllten Mischung bei einer Temperatur von 120 °C erfolgte. Die Viskosität der erhaltenen Mischung betrug 32 Pas.

### Beispiel 9

In einem 0,5 l fassenden Zwei-Wellen-Kneter wurden 270 g einer gefällten und mit Stearinsäure behandelten Kreide mit einer Oberfläche von 4 m²/g in ein Gemisch aus 90 g eines hydroxyterminierten Polydimethylsiloxans einer Viskosität von 30 Pas, 6 g eines hydroxyterminierten Polydimethylsiloxans einer Viskosität von 0,05 Pas, 30 g eines trimethylsiloxyterminierten Polydimethylsiloxans einer Viskosität von 0,1 Pas und 60 g Hexamethyldisiloxan eingearbeitet. Diese Mischung wurde unter ständigem Kneten unter Vakuum auf 110°C aufgeheizt, wobei das nicht reaktive Hexamethyldisiloxan aus der Mischung entfernt wurde. Die so erhaltene hochgefüllte Siliconkautschuk-Vormischung wurde dann bei 80°C eine Stunde geknetet. Nach der mechanischen Beanspruchung wurde mit weiteren 180 g des hydroxyterminierten Polydimethylsiloxans einer Viskosität von 30 Pas rückverdünnt. Die Viskosität der verdünnten Mischung betrug 129 Pas.

100 g der erhaltenen Mischung wurden mit 10 g einer Vernetzerflüssigkeit, bestehend aus 20 Gew.-Teilen eines Teilhydrolysates von Methyltrimethoxysilan, 10 Gew.-Teilen Propyltriethoxysilan, 55 Gew.-Teilen einer Haftvermittlerkombination aus Aminopropyltriethoxysilan und Glycidoxytrimethoxysilan, 10 Gew.-Teilen Ruß und 5 Gew.-Teilen Dibutylzinndilaurat, während 7 Tage bei Raumtemperatur ausgehärtet. Das ausgehärtete Material wies eine Härte von 52 Shore A auf Angefertigte Glasprüfkörper wiesen eine Reißdehnung von 120 % und eine Zugfestigkeit von 1,0 MPa auf

### Beispiel 10

Das Beispiel 9 wurde wiederholt mit der Abänderung, dass 270 g einer gefällten und mit Stearinsäure behandelten Kreide mit einer Oberfläche von 4 m²/g in ein Gemisch aus 60 g eines hydroxyterminierten Polydimethylsiloxans einer Viskosität von 30 Pas, 6 g eines hydroxyterminierten Polydimethylsiloxans einer Viskosität von 0,05 Pas, 30 g eines trimethylsiloxyterminierten Polydimethylsiloxans einer Viskosität von 0,1 Pas und 90 g Hexamethyldisiloxan eingearbeitet wurden. Nach der mechanischen Beanspruchung wurde mit weiteren 210 g des hydroxyterminierten Polydimethylsiloxans der Viskosität von 30 Pas rückverdünnt. Die Viskosität der erhaltenen Mischung betrug 124 Pas.

100 g der fertigen Mischung wurden mit 10 g der Vernetzerflüssigkeit 7 Tage bei RT ausgehärtet. Das ausgehärtete Material wies eine Härte von 50 Shore A auf. An Glasprüfkörpern wurden eine Reißdehnung von 150 % und eine Zugfestigkeit von 1, 1 MPa gemessen.

### Beispiel 11 (Vergleichsbeispiel)

Das Beispiel 9 wurde wiederholt mit der Abänderang, dass 270 g einer gefällten und mit Stearinsäure behandelten Kreide mit einer Oberfläche von 4 m²/g in ein Gemisch aus 150 g eines hydroxyterminierten Polydimethylsiloxans einer Viskosität von 30 Pas, 6 g eines hydroxyterminierten Polydimethylsiloxans einer Viskosität von 0,05 Pas und 30 g eines trimethylsiloxyterminierten Polydimethylsiloxans einer Viskosität von 0,1 Pas eingearbeitet wurden. Die erhaltene Mischung wurde nach 1 Stunde Kneten bei 80°C mit weiteren 210 g des hydroxyterminierten Polydimethylsiloxans der Viskosität von 30 Pas rückverdünnt. Die Viskosität der erhaltenen Mischung betrug 182 Pas.

100 g der fertigen Mischung wurden mit 10 g der Vernetzerflüssigkeit 7 Tage bei RT ausgehartet. Das ausgehärtete Material wies eine Härte von 56 Shore A auf. An Glasprüfkörpern wurden eine Reißdehnung von 110 % und eine Zugfestigkeit von 0,9 MPa gemessen.

Das Vergleichsbeispiel 11 zeigt, dass die Mischung, welche die gleiche Zusammensetzung wie die der Beispiele 4 und 5 hat, eine für die spätere Anwendung unerwünschte, hohe Viskosität aufweist. Die damit hergestellten Glasprufkörper erreichen keine ausreichend hohen Zugfestigkeiten und Reißdehnungen.

## Patentansprüche

1. Verfahren zur Herstellung von hochgefüllten Siliconpolymer-Feststoff-Vormischungen, dadurch gekennzeichnet, dass in eine Mischung (A) aus
(a) 100 Gew.-Teilen mindestens eines linearen und/oder verzweigten Polyorganosiloxanes, bei welchem bis zu 5 Mol- % der Organoreste vernetzungsfähige Gruppen sind, und
(b) 5 bis 200 Gew. -Teilen mindestens einer leichflüchtigen, keine hydrolysierbaren Gruppen aufweisenden, niedermolekularen siliciumorganischen Verbindung
100 bis 500 Gew.-Teile eines Feststoffes (B) eingearbeitet werden, die Verbindung (b) entfernt wird und anschließend die Siliconpolymer-Feststoff-Mischung mechanisch beansprucht wird.

2. Verfahren nach Anspruch 1, dadurch gekennzeichnet, dass das Polyorganosiloxan (a) eine Molmasse von mindestens 1.000 aufweist.

3. Verfahren nach Anspruch 1, dadurch gekennzeichnet, dass das Polyorganosiloxan (a) Dimethylhydroxysiloxy-, Trimethylsiloxy- und/oder Dimethylvinylsiloxy-Endgruppen aufweist.

4. Verfahren nach Anspruch 1, dadurch gekennzeichnet, dass die leichtflüchtige, keine hydrolysierbare Gruppen aufweisende, niedermolekulare siliciumorganische Verbindung (b) Hexaalkyldisiloxan und/oder Octaalkyltrisiloxan ist.

5. Verfahren nach Anspruch 1, dadurch gekennzeichnet, dass die leichtflüchtige, keine hydrolysierbare Gruppen aufweisende, niedermolekulare siliciumorganische Verbindung (b) ein oder mehrere cyclische Dialkylsiloxane mit 3 bis 6 Siliciumatomen darstellt.

6. Verfahren nach Anspruch 1, dadurch gekennzeichnet, dass als Feststoff (B) gefällte und/oder natürliche Kreide eingesetzt wird.

7. Verfahren nach Anspruch 1, dadurch gekennzeichnet, dass als Feststoff (B) hochdisperse Kieselsäure eingesetzt wird.

8. Verfahren nach Anspruch 1 und 7, dadurch gekennzeichnet, dass in eine Mischung (A) aus
(aa) 50 bis 99,9 Gew.-Teilen mindestens eines linearen und/oder verzweigten Polyorganosiloxanes, bei welchem bis zu 5 Mol- % der Organoreste vernetzungsfähige bewirkende Gruppen sind,
(ab) 0,1 bis 50 Gew.-Teilen mindestens einer zur Oberflächenbehandlung der Kieselsäure geeigneten reaktiven Verbindung und
(b) 5 bis 200 Gew.-Teilen mindestens einer leichflüchtigen, keine hydrolysierbaren Gruppen aufweisenden, niedermolekularen siliciumorganischen Verbindung
100 bis 500 Gew.-Teile hochdisperser Kiesesäure (B) eingearbeitet werden,
die Verbindung (b) sowie weitere enthaltene oder gebildete leichtflüchtige Bestandteile entfernt werden und anschließend die Siliconpolymer-Feststoff- Mischung mechanisch beansprucht wird.

9. Verfahren nach Anspruch 8, dadurch gekennzeichnet, dass als reaktive Verbindung Disilazane oder Trialkylsilanole zugesetzt werden.
